# EUROPÄISCHE PATENTSCHRIFT

(11) **EP 1 993 807 B1**
(45) Veröffentlichungstag und Bekanntmachung des Hinweises auf die Patenterteilung: **30.03.2016**
(21) Anmeldenummer: 07712120.0
(22) Anmeldetag: 26.01.2007
(51) Int. Cl.: B29C 47/62

(54) **EXTRUDERSCHNECKE**
EXTRUDER SCREW
VIS D'EXTRUDEUSE

(30) Priorität: 08.03.2006 DE 102006011068
(43) Veröffentlichungstag der Anmeldung: 26.11.2008
(73) Patentinhaber: KraussMaffei Technologies GmbH, 80997 München (DE)
(72) Erfinder: WÜRTELE, Martin, 86316 Friedberg (DE)
(74) Vertreter: Wilhelm, Ludwig
(86) Internationale Anmeldenummer: PCT/EP2007/050804
(87) Internationale Veröffentlichungsnummer: WO 2007/101751

(56) Entgegenhaltungen:
- WO-A-2006/022839
- DE-A1- 19 548 524
- GB-A- 2 137 893
- US-A- 3 989 941
- US-A- 4 798 472
- US-B1- 6 227 692
- US-B1- 6 672 753

## Beschreibung

Die vorliegende Erfindung betrifft eine Extruderschnecke nach dem Anspruch 1.

Nach dem Stand der Technik ist allgemein bekannt, dass Schnecken zur Verarbeitung von thermoplastischen Werkstoffen über die Länge der Extruderschnecke gesehen in drei Schneckenabschnitte bzw. Zonen aufgeteilt werden: Eine Einzugszone nimmt einen als Schüttgut vorhandenen Kunststoff oder ein Gemisch aus mehreren Kunststoffen und/oder Zuschlagsstoffen, z.B. Naturfasern oder Mineral- bzw. Glasfasern und Pigmentstoffen, auf und fördert ihn unter Verdichtung und Erwärmung in eine Umwandlungszone. In der Umwandlungszone wird der schon vorverdichtete und angewärmte Werkstoff entgast, weitgehend plastifiziert und homogenisiert. Das Material gelangt anschließend in eine Ausstoß-, Pump- bzw. Meteringzone, in der die ankommende Masse homogenisiert und in ein nachfolgendes Werkzeug gefördert wird.

Derartige Extruderschnecken zur Einschneckenplastifizierung sind aus dem Stand der Technik in unterschiedlichsten Bauformen mit verschiedenen Eigenschaften bekannt. So ist aus der US 4,173,417 (Kruder) eine Extruderschnecke bekannt, bei der die Ausstoß- bzw. Meteringzone als sogenannte Wave-Zone ausgeführt ist. Die Wave-Zone besteht aus einem Hauptsteg und einem parallel angeordneten Barrieresteg, wodurch sich zwei parallele Kanäle ergeben. Jeder dieser Kanäle weist eine Wiederholung von Wellen auf, wobei innerhalb einer Welle einem Berg in dem einen Kanal ein Tal im gegenüberliegenden Kanal zugewiesen wird. Der Barrieresteg sowie die Berge der Wellen sind so dimensioniert, dass Schmelze über den Barrieresteg fließt, der Feststoff aber zurückgehalten wird und über den Berg strömt.

Auch aus der US 4,405,239 (Chung) ist eine Extruderschnecke bekannt, bei der die Meteringzone als Wave-Zone ausgeführt ist. Die Wave-Zone hat die Aufgabe, das Mischen des heißen, aufgeschmolzenen Kunststoffes mit dem kalten, unaufgeschmolzenen Kunststoff mit Hilfe ihrer Geometrie zu fördern. Die Geometrie der Wave-Zone erzwingt ein Aufbrechen des Feststoffes im Schneckenkanal in kleine Teilstücke und eine Durchmischung dieser Teilstücke mit geschmolzenem Kunststoff. Dadurch wird der Wärmeübergang von dem geschmolzenen Kunststoff in den unaufgeschmolzenen Kunststoff gesteigert. Die Wave-Zone besitzt einen Hauptsteg und einen parallelen Barrieresteg, der den Kanal in zwei gleichgroße Teilkanäle aufteilt. Der Barrieresteg weist einen großen Spalt zum Zylinderinnendurchmesser auf, so dass Schmelze und Feststoff gleichermaßen leicht über den Barrieresteg strömen können. Das Überströmen wird durch eine Reduzierung der Gangtiefe in dem einem Kanal erzielt, während die Gangtiefe im benachbarten Kanal gleichzeitig (parallel) zunimmt. An einem Berg wird die Funktion der beiden Stege - Haupt- und Barrieresteg - gewechselt, d.h. der Hauptsteg wird nun gegenüber dem Zylinderinnendurchmesser abgesetzt und somit zum Barrieresteg, während der Spalt des Barrieresteges reduziert wird und dieser nun zum Hauptsteg wird. Dieser Wechsel der Funktion gewährleistet, dass das Schmelze- / Feststoffgemisch nur in Richtung der Schneckenspitze über den Barrieresteg strömen muss. Somit wird das Überströmen immer durch die Schneckenrotation begünstigt bzw. ermöglicht. Bei Chung kommt es somit auf eine optimale Durchmischung von Feststoff und Schmelze an. Je besser die Durchmischung ist, desto effizien-ter ist der Wärmeübergang und damit die Aufschmelzleistung der Wave-Zone.

Gemäß der Offenbarung der US 6,056,430 (Medici) wird erstmals die Aufschmelzleistung einer Barriereschecke mit einer Wave-Zone nach Kruder kombiniert. Die Schnecke ist aus einer eingängigen Einzugszone, einer eingängigen Barrierezone und einer Meteringzone, die als Wave-Zone ausgeführt ist, aufgebaut. Dabei wird am Ende der Barrierezone Feststoff von der passiven Flanke des Hauptsteges zur aktiven Flanke des Hauptsteges transportiert. Der Austausch des Feststoffes von der passiven Flanke des Hauptsteges zur aktiven Flanke des Hauptsteges erhöht die Scherung und den Druck am Feststoffbett, wodurch ein schnelleres und effizienteres Aufschmelzen des Feststoffes erfolgen kann. Der Austausch des Feststoffes wird u.a. dadurch erreicht, dass der Barrieresteg der Barrierezone in den Hauptsteg der Wave-Zone übergeht und in der Meteringzone fortgeführt wird und umgekehrt der Hauptsteg der Barrierezone zu dem Barrieresteg der Wave-Zone wird. Mit dieser Maßnahme wird der Nachteil von herkömmlichen Schnecken, in denen das Feststoffpaket die Meteringzone hauptsächlich an der passiven Flanke des Hauptsteges durchströmt, kompensiert. Die beiden Stege - also Haupt- und Barrieresteg - werden am Ende der Barrierezone und vor Beginn der Meteringzone nicht unterbrochen. An der passiven Flanke des Hauptsteges kann dem Feststoffpaket nicht die höhere Scherrate und der höhere Druck zugeführt werden, wie dies auf der aktiven Flanke des Hauptsteges möglich ist. Eine Durchmischung von Feststoff und Schmelze zwischen der Barrierezone und der Meteringzone ist nicht erwünscht, lediglich eine Umlagerung des Feststoffes von der passiven auf die aktive Flanke des Hauptsteges.

Gemäß der US 6,672,753 (Womer) wird ebenfalls die Aufschmelzleistung einer Barrierezone mit einer Wave-Zone nach Kruder kombiniert. Die Schnecke ist aus einer eingängigen Einzugszone, einer eingängigen Barrierezone, einer Reorientierungszone und einer Meteringzone, die als Wave-Zone ausgeführt ist, aufgebaut. In der Reorientierungszone wird ebenfalls Feststoff von der passiven Flanke des Hauptsteges zur aktiven Flanke des Hauptsteges transportiert. Die Reorientierung des Feststoffes wird dadurch erreicht, dass der Barrieresteg der vorhergehenden Barrierezone unterbrochen wird. Der Hauptsteg der Barrierezone wird als Hauptsteg der Reorientierungszone fortgeführt, wobei die Gangsteigung des Hauptsteges in der Reorientierungszone abnimmt. Somit mündet der Feststoff- und Schmelzekanal einer Barrierezone in einen eingängigen Kanal der Reorientierungszone, so dass Feststoff, der durch die Reorientierungszone strömt, auf die aktive Flanke des Hauptsteges strömt. In der anschließenden Meteringzone wird ein zweiter Steg angeordnet, der den Kanal so aufteilt, dass der durch die Reorientierungszone strömende Feststoff an der aktiven Flanke des Hauptsteges liegt und die Schmelze an der passiven Flanke des Hauptsteges. Somit kann dem Feststoffpaket ein höherer Druck und eine höhere Scherung angeboten werden, siehe US 6,056,430 Medici.

Die beiden Extruderschneckenkonzepte gemäß der US 6,056,430 (Medici) und der US 6,672,753 (Womer) machen sich die Tatsache zu Nutzen, dass an der aktiven Flanke des Hauptsteges ein höherer Druck und eine höhere Scherrate erzielt wird, da der Hauptsteg, im Gegensatz zu einem Barrieresteg, ein kleines Spiel zum Innendurchmesser des Zylinders und eine größere Stegbreite aufweist, was wiederum eine höhere Scherung des geförderten Materials erzielt. Da bei herkömmlichen Schnecken das Feststoffpaket, welches die Meteringzone durchströmt, hauptsächlich auf der passiven Flanke des Hauptsteges anstelle auf der aktiven Flanke des Hauptsteges liegt, kann dem Feststoffpaket nicht der höhere Druck und die höhere Scherung zur Verfügung gestellt werden, wie dies an der aktiven Flanke des Hauptsteges der Fall ist. Bei beiden Schneckenkonzepten wird ein Übergang von einer eingängigen Barrierezone in eine Wave-Zone vorgestellt, die einen Austausch von Feststoff und Schmelze realisiert. Der Austausch des Feststoffes von der passiven Flanke des Hauptsteges zur aktiven Flanke des Hauptsteges erhöht die Scherung und den Druck am Feststoffbett, wodurch ein schnelleres und effizienteres Aufschmelzen des Feststoffes durch Dissipation erfolgen kann.

Die US 6,227,692 B1 offenbart eine Extruderschnecke mit fünf Zonen, nämlich einer Einzugszone, einer Kompressionszone, einer als Wave-Zone ausgebildeten Aufschmelzzone, einer Mischzone und einer als Wave-Zone ausgebildeten Ausstoßzone. Die Mischzone ist in einem Ausführungsbeispiel als mehrgängiges Schneckenelement ausgebildet, wobei die Gangtiefe der einzelnen Schneckengänge in Strömungsrichtung abnimmt und wobei die Gangsteigung größer ist als die Gangsteigung in den beiden Zonen zwischen der Einzugszone und der Mischzone

Die WO 2006/022839 A2 offenbart ebenfalls eine Extruderschnecke mit fünf Zonen, nämlich einer Einzugszone, einer Übergangszone, einer Aufschmelzzone, einer Barrierezone und einer Ausstoßzone, wobei die der Ausstoßzone vorgeschaltete Barrierezone zum Trennen von Feststoffteilen und Schmelze ausgebildet ist.

Es ist daher die Aufgabe der vorliegenden Erfindung, Extruderschnecken der eingangs genannten Art unter Optimierung der Aufschmelzleistung einer als Wave-Zone ausgebildeten Ausstoßzone weiterzubilden.

Diese Aufgabe wird durch die Merkmale von Anspruch 1 gelöst. In den Extruderschneckenkonzepten gemäß der US 6,056,430 (Medici) und US 6,672,753 (Womer) ist eine Durchmischung von Feststoff und Schmelze vor dem Erreichen der Metering-Zone, ie als Wave-Zone ausgeführt ist, unerwünscht. Bei Medici wird durch die Umkehr der Stegfunktion nur eine geringe Umlagerung von Feststoff und Schmelze ermöglicht. Ebenso verhindert der zweite Steg eine homogene Durchmischung von Feststoff und Schmelze. Bei Womer wird die Gangsteigung der Reorientierungszone reduziert, wodurch sich die Relativgeschwindigkeit von Feststoff und Schmelze in der Zone reduziert. Eine hohe Relativgeschwindigkeit führt zu hohen Schubspannungen, die an dem Feststoffpaket wirken und dieses in Teilstücke zerbricht. Die Wirkung einer Wave-Zone beruht darauf, dass das Feststoffpaket beim Überströmen eines Überströmsteges in kleine Feststoffinseln aufgebrochen wird und mit der umliegenden Schmelze vermischt wird, wodurch der Wärmeübergang von der Schmelze in den Feststoff verbessert wird. Jedes erneute Überströmen eines schicht eines Feststoffpartikels abgestreift wird und somit erneut Schmelze an das un-aufgeschmolzene Granulat gelangt. Eine Durchmischung im Vorfeld der Wave-Zone wird in dem vorstehend zitierten Stand der Technik als nicht erforderlich angesehen und unterbleibt daher. Somit sind diese beiden Schneckenkonzepte für ein aktives Durchmischen von Feststoff und Schmelze auch nur bedingt geeignet.

Eine Basis der vorliegenden Erfindung bildet die Erkenntnis, dass es entscheidend für die Aufschmelzgeschwindigkeit eines Einschneckenextruders ist, dass möglichst früh eine gleichmäßige Durchmischung von Feststoff und Schmelze stattfindet. Dies wird bei den beiden Schneckenkonzepten von Medici und Womer nur unzureichend umgesetzt. Feststoffblock und Schmelze werden daher in Vorrichtungen nach der Lehre von Medici und Womer vor Erreichen der Wave-Zone nur unzureichend gemischt. Auch im sonstigen Stand der Technik wird entweder keine Vorkehrung für eine Durchmischung getroffen, oder es wird versucht, die Position von Feststoff und Schmelze vor Erreichen der Wave-Zone zu tauschen. D.h. es wird lediglich der Feststoff auf die aktive Flanke des Hauptsteges und die Schmelze auf die passive Flanke des Hauptsteges transportiert. Der Grund hierfür ist, dass an der aktiven Flanke des Hauptsteges ein höherer Druck und eine höhere Scherrate erzielt werden, da der Hauptsteg ein kleines Spiel zum Innendurchmesser des Zylinders und eine größere Stegbreite aufweist, was wiederum eine höhere Aufschmelzrate an dem geförderten Material erzielt. Hier dominiert Dissipation. Beides sorgt jedoch nicht für eine Durchmischung von Feststoff und Schmelze. Dadurch wird die Aufschmelzleistung einer folgenden Wave-Zone nicht optimal genutzt. Somit wird der mögliche Durchsatz bzw. die mögliche Homogenität der Schmelze in Vorrichtungen nach dem Stand der Technik nicht erreicht.

Erfindungsgemäß wird dagegen nun ein Mischzone zwischen der Aufschmelzzone und der Ausstoß- bzw. Meteringzone angeordnet. Hierdurch wird noch vor dem Eintreten der thermisch vorbehandelten und verdichteten Masse für eine gute Durchmischung von Feststoffen und Schmelze gesorgt. Erst durch diese Durchmischung kann eine Aufschmelzleistung einer nachfolgenden Ausstoßzone effektiver genutzt werden, so dass ein maximaler Durchsatz und zugleich auch eine hohe Homogenität in der Schmelze beim Verlassen der Ausstoßzone sicher erreicht werden können.

Weitere vorteilhafte Merkmale sind Gegenstand der Unteransprüche. Dem gemäß ist die Aufschmelzzone mehrgängig ausgebildet. Hierzu weist die Aufschmelzzone zwei oder mehr Hauptstege auf und/oder die Aufschmelzzone ist als zwei- oder mehrgängige Barriere ausgeführt. Ein vorteilhafter Effekt einer zwei- oder mehrgängigen Aufschmelzzone besteht darin, dass am Ende dieser Aufschmelzzone zwei oder mehr Feststoff-/ Schmelzepaare nebeneinander liegen, wobei sich Feststoff und Schmelze abwechseln. Durch dieses Merkmal wird also eine Durchmischung bereits vor Erreichen einer erfindungsgemäß vorgesehenen Mischzone verbessert.

Die Gangsteigung in der Mischzone ist größer als in der vorangehenden Zone. Die Mischzone kann je nach Ausführungsform eine im Vergleich zu der vorangehenden Zone der Schnecke hohe Gangsteigung von insbesondere mehr als circa 21° aufweisen. Bevorzugt wird eine Gangsteigung in der Mischzone von mehr als 45° bis ca. 65 - 70°. Durch diese sehr hohe Gangsteigung herrscht in der Mischzone eine hohe Relativgeschwindigkeit, durch die eine auf das Feststoff-/ Schmelzegemisch wirkende hohe Schubspannung erzeugt wird. Hierdurch wird ein in der Masse enthaltener Feststoff im Bereich der Mischzone in Schmelze durchmischt. Eine dominierende Aufschmelzleistung der Mischzone besteht somit darin, dass ein verbesserter Wärmeübergang von der Schmelze in die einzelnen Feststoffinseln bewirkt wird.

Die Steigung einer der Mischzone nachfolgenden Zone kann prinzipiell kleiner, gleich groß oder gar noch größer sein. Bevorzugt wird jedoch, dass die Gangsteigungen der zu der Mischzone benachbarten Zonen, also der Aufschmelzzone und der Ausstoßzone, im Wesentlichen gleich groß ist. Insbesondere ist die Gangsteigung in der Mischzone dann größer als die Gangsteigung in den benachbarten Zonen.

In einer bevorzugten Ausführungsform der Erfindung werden in der Mischzone für eine noch bessere Durchmischung von Feststoff und Schmelze Mischstifte angeordnet. Je nach Ausführungsform der Erfindung werden diese Mischstifte in Form von einer oder mehreren Stiftreihen in Umfangsrichtung und/oder unter einem Winkel zum Hauptsteg der Mischzone angeordnet. Im Anschluss an die Behandlung in der Mischzone erfolgt eine Überführung der in dieser Ausführungsform der Erfindung noch verbessert durchmischten Masse in die als Wave-Zone ausgebildete Ausstoßzone.

In einer weiteren Ausführungsform der Erfindung ist mindestens ein Überströmsteg in der Wave- bzw. Ausstoßzone unter einem Winkel gegenüber dem Hauptsteg gekippt angeordnet. Hierdurch wird die Durchmischung auch im Bereich der Ausstoßzone nochmals erhöht.

In einer bevorzugten Ausführungsform der Erfindung läuft der Hauptsteg der Mischzone in den ersten Überströmsteg der Wave-zone stetig aus. Dabei wird vorzugsweise auch die Steigung des Hauptstegs für den ersten Überströmsteg der Wavezone beibehalten.

Durch die Durchmischung von Feststoff und Schmelze in der Mischzone erreicht in einer erfindungsgemäß aufgebauten Extruderschnecke ein gegenüber bekannten Vorrichtungen gleichmäßigeres Feststoff-/ Schmelzegemisch die Wave-Zone. Somit wird bereits bei dem ersten Übertritt des Gemisches über einen Überströmsteg eine größere Aufschmelzleistung erbracht. Die Wirkung einer Wave-Zone beruht darauf, dass das Feststoffpaket beim Überströmen eines Überströmsteges in kleine Feststoffinseln aufgebrochen wird und mit der umliegenden Schmelze vermischt wird, wodurch der Wärmeübergang von der Schmelze in den Feststoff verbessert wird. Jedes erneute Überströmen eines Steges führt dazu, dass die an- bzw. aufgeschmolzene Grenzschicht eines Feststoffpartikels abgestreift wird und somit erneut Schmelze an das unaufgeschmolzene Granulat gelangt. Somit ist es entscheidend für die Aufschmelzgeschwindigkeit, dass möglichst früh eine gleichmäßige Durchmischung von Feststoff und Schmelze stattfindet.

Die Erfindung wird nachfolgend anhand einer Zeichnung beispielhaft erläutert. Es zeigen hierbei:
- Figur 1:: einen Ausschnitt einer erfindungsgemäßen Extruderschnecke in liegender Position in einer abgewickelten Darstellung;
- Figur 2:: eine Darstellung zur vektoriellen Zerlegung von Ge-schwindigkeiten in Abhängigkeit von einer jeweiligen Gangsteigung;
- Figur 3a bis 3c:: Darstellungen von drei Ausführungsformen erfindungsgemäßer Mischzonen analog der Darstellung von Figur 1 und
- Figur 4a bis 4d:: Darstellungen von beispielhaften Ausschnitten von Extruderschnecken nach Kruder, Chung, Medici und Wormer aus den Eingangs jeweils zitierten Patentschriften.

Über die verschiedenen Darstellungen von Ausführungsbeispielen der Erfindung hinweg werden nachfolgend einheitlich stets gleiche Bezeichnungen und Bezugszeichen für gleiche Elemente verwendet.

Eine Extruderschnecke 1 erstreckt sich entlang einer Schneckenlängsachse und ist in einem nicht dargestellten Extrudergehäuse um die Längsachse drehbar gelagert. Über eine Gesamtlänge der Extruderschnecke gesehen wird in drei Schneckenabschnitte bzw. Zonen unterschieden: eine Einzugszone 2, eine Umwandlungs- bzw. Aufschmelzzone 3 und eine Ausstoß-, Pump- bzw. Meteringzone 4.

Eine erfindungsgemäße Extruderschnecke 1 weist demgegenüber einen vierteiligen Aufbau auf, da eine Mischzone 5 zwischen der Aufschmelzzone 3 und der als Wave-Zone ausgebildeten Ausstoß- bzw. Meteringzone 4 angeordnet ist. In einer derartigen Extruderschnecke 1 sorgt die Mischzone 5 für eine sehr gute und gleichmäßige Durchmischung von aus der Aufschmelzzone 3 herausbeförderter Schmelze und Feststoff. Dadurch kann die anschließend als Wave-Zone ausgebildete Meteringzone 4, in welcher der restliche Feststoff durch den Wärmeübergang von der Schmelze in den Feststoff aufgeschmolzen wird, optimal und effizient genutzt werden. Die Durchmischung von Feststoff und Schmelze in der Mischzone 5 reduziert das erforderliche Drehmoment bzw. die erforderliche Dissipation zum vollständigen Aufschmelzen des Feststoffes weiter gegenüber bisher bekannten Schneckenkonzepten.

Durch die Durchmischung von Feststoff und Schmelze in der Mischzone 5 erreicht somit ein gleichmäßiges Feststoff-/ Schmelzegemisch die Wave-Zone 4. Somit wird bereits bei dem ersten Übertritt des Gemisches über einen Überström- bzw. Barrieresteg 6 der Wave-Zone 4 eine gegenüber bekannten Vorrichtungen größere Aufschmelzleistung erbracht. Die Wirkung einer Wave-Zone 4 beruht darauf, dass das Feststoffpaket beim Überströmen des von zwei Hauptstegen 7 flankierten Überströmsteges 6 in kleine Feststoffinseln aufgebrochen wird und mit der umliegenden Schmelze vermischt wird, wodurch der Wärmeübergang von der Schmelze in den Feststoff verbessert wird. Jedes erneute Überströmen eines Steges 6 führt dazu, dass die an- bzw. aufgeschmolzene Grenzschicht eines Feststoffpartikels abgestreift wird und somit erneut Schmelze an das unaufgeschmolzene Granulat gelangt. Somit ist es entscheidend für die Aufschmelzgeschwindigkeit, dass möglichst früh eine gleichmäßige Durchmischung von Feststoff und Schmelze stattfindet.

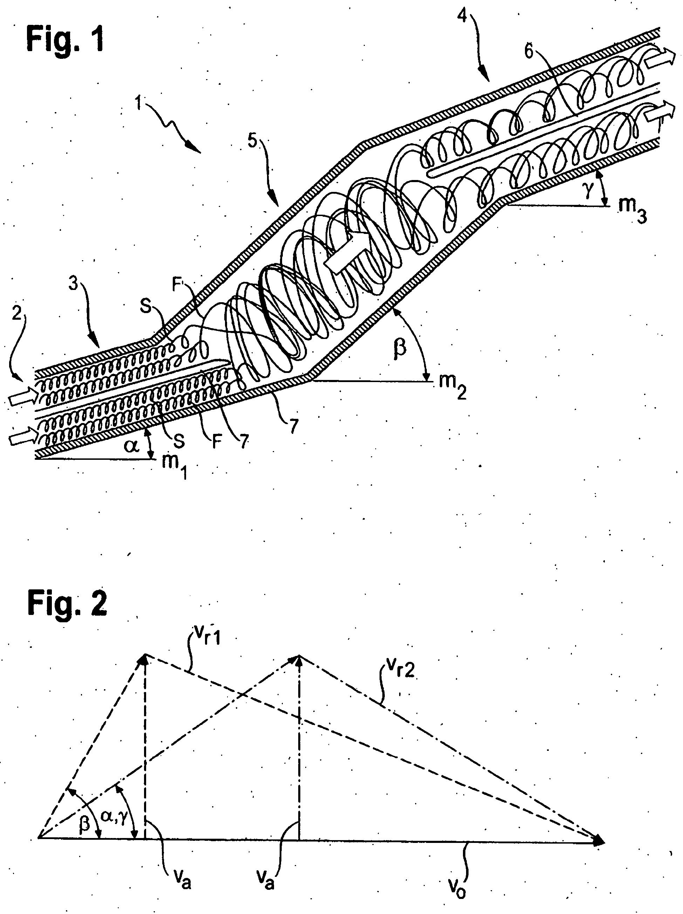

Figur 1 zeigt einen Ausschnitt einer erfindungsgemäßen Extruderschnecke 1 in einer abgewickelten Darstellung, wobei eine Gangsteigung m₂ im Bereich einer Mischzone 5 deutlich größer als in der jeweils anschließenden Umwandlungszone 3 und Ausstoß- bzw. Wave-Zone 4 ist. Die Gangsteigungen m₁, m₃ der zu der Mischzone benachbarten Zonen, also der Aufschmelzzone 3 und der Ausstoßzone 4, sind im Wesentlichen gleich groß. Zur Verdeutlichung sind in Figur 1 zu den Steigungen m₁, m₂, m₃ die Winkel α, β, γ als Anzeiger einer Gangsteigung einer jeweiligen Zone der Extruderschnecke 1 eingezeichnet.

Die Mischzone 5 ist zwischen einer mehrgängigen, hier durch zwei Hauptstege 7 zweigängigen Aufschmelzzone 3 und einer als Wave-Zone ausgeführten Meteringzone 4 angeordnet. Für eine bessere Durchmischung als bei den angegebenen Ausführungen sorgt u.a. die Mehrgängigkeit der Aufschmelzzone 3, die der Mischzone 5 vorgeschaltet ist, und die hohe Gangsteigung m₂ der Mischzone 5, die eine hohe Schubspannung an dem Feststoff- / Schmelzegemisch verursacht. Die Skizze von Figur 2 verdeutlicht mit einer Darstellung zur vektoriellen Zerlegung einer Umfangsgeschwindigkeit vₒ in eine Axialgeschwindigkeit vₐ und eine Relativgeschwindigkeit vᵣ die Abhängigkeit dieser Komponenten von einer jeweiligen, durch die Winkel α, β, γ angegebenen Gangsteigung m. Bei konstanter Umfangsgeschwindigkeit vₒ und gleichbleibendem, durch die Axialgeschwindigkeit vₐ angegebenen Durchsatz einer Extruderschnecke 1 wird eine Relativgeschwindigkeit vᵣ durch eine Vergrößerung der Gangsteigung m deutlich erhöht. Dieser Erhöhung der Relativgeschwindigkeit vᵣ hat zugleich eine Erhöhung der auf das in der Extruderschnecke 1 geförderte Misch-Gut einwirkenden Scherkräfte zur Folge.

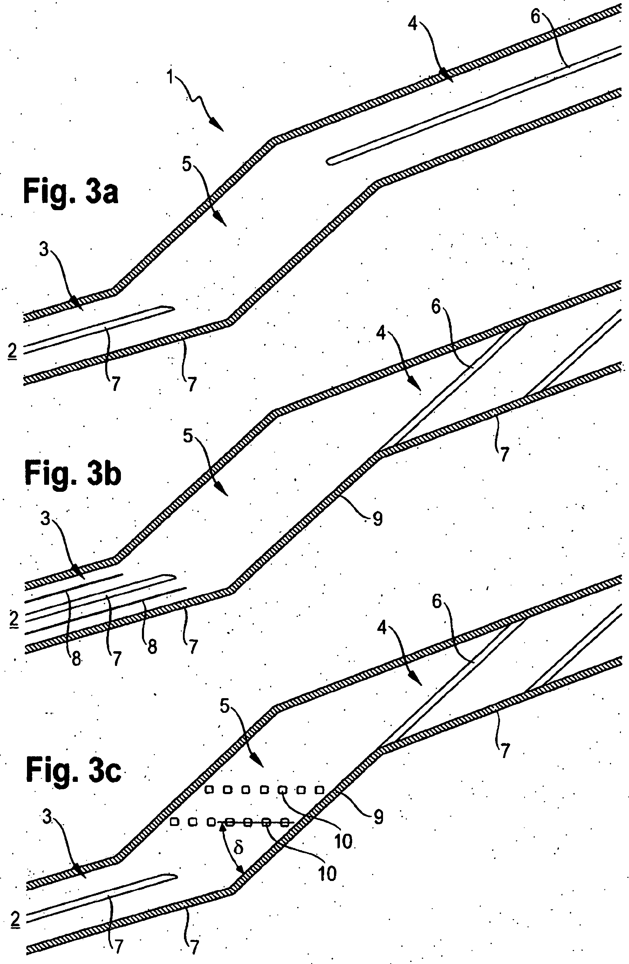

Die Mischzone 5 schließt sich an die mehrgängige Aufschmelzzone 3 an, die im Ausführungsbeispiel von Figur 1 zweigängig ausgebildet ist. Die Aufschmelzzone 3 kann aus mehr als den hier dargestellten zwei Hauptstegen 7 bestehen und/oder als zwei- oder mehrgängige Barriere 8 ausgeführt sein, wie in dem Ausführungsbeispiel von Figur 3b angedeutet. Der Vorteil einer zwei- oder mehrgängigen Aufschmelzzone 3 besteht in der Tatsache, dass am Ende dieser Aufschmelzzone 3 zwei oder entsprechend mehr Feststoff- / Schmelzepaare nebeneinander liegen. Dabei wechseln sich Feststoff F und Schmelze S ab, wir in Figur 1 andeutungsweise durch entsprechende Linien F und S dargestellt. Die Mischzone 5 soll eine Gangsteigung m₂ von mehr als 21° aufweisen. Gangsteigungen von 30° bis mehr als 45° werden bevorzugt, wobei in besonderen Fällen sogar Gangsteigungen von 65 bis ca. 70° eingerichtet werden. Durch die hohe Gangsteigung m₂ erhöht sich die Relativgeschwindigkeit in der Mischzone 5 und somit die an dem Feststoff-/Schmelze-gemisch wirkende Schubspannung. Dadurch wird der Feststoff besser in einzelne Feststoffinseln aufgebrochen und mit der umliegenden Schmelze durchmischt. Die dominierende Aufschmelzleistung in der Mischzone 5 wird somit durch den verbesserten Wärmeübergang von der Schmelze in die Feststoffinseln erbracht, wodurch sich eine Vorrichtung der vorstehend beschriebenen Art deutlich von den bekannten Ausführungsformen nach Medici und Wormer unterscheidet.

Die Abbildung von Figur 3a entspricht dem Ausführungsbeispiel gemäß Figur 1 und zeigt drei Zonen 3, 5, 4 eines Extruderschnecke 1 mit zweigängiger Aufschmelzzone 3, Mischzone 5 mit deutlich erhöhter Gangsteigung m und einer als Wave-Zone ausgeführten Meteringzone 4. Zusätzlich sind gemäß den Ausführungsbeispielen von Figur 3b und 3c die zwei Überströmstege 6 der Wave-Zone 4 unter einem Winkel 5 gegenüber den flankierenden und zueinander parallel verlaufenden Hauptstegen 7 gekippt angeordnet. In diesen Ausführungsbeispielen läuft ein Hauptsteg 9 der Mischzone 5 in den ersten Überströmsteg 6 der Wave-zone 4 stetig aus. Dabei wird hierbei auch die Steigung m₂ des Hauptstegs 9 für den ersten Überströmsteg 6 der Wavezone 4 beibehalten, so dass hinsichtlich dieser Stege hier ein streng monotoner, geradliniger Übergang zwischen Mischzone 5 und Wavezone 4 ausgebildet ist.

In dem Ausführungsbeispiel von Figur 3c sind in der Mischzone 5 zudem für eine noch bessere Durchmischung von Feststoff und Schmelze Mischstifte 10 angeordnet. Dies kann je Anwendungsfall in Form von einer oder mehrerer Stiftreihen in Umfangsrichtung oder unter einem Winkel zum Hauptsteg 7 erfolgen. In Figur 3c sind zwei Reihen von Mischstiften 10 unter einem Winkel zum Hauptsteg 7 vorgesehen. Bei allen Variationen folgt jedoch im Anschluss an die Mischzone 5 jeweils eine Wave-Zone 4.

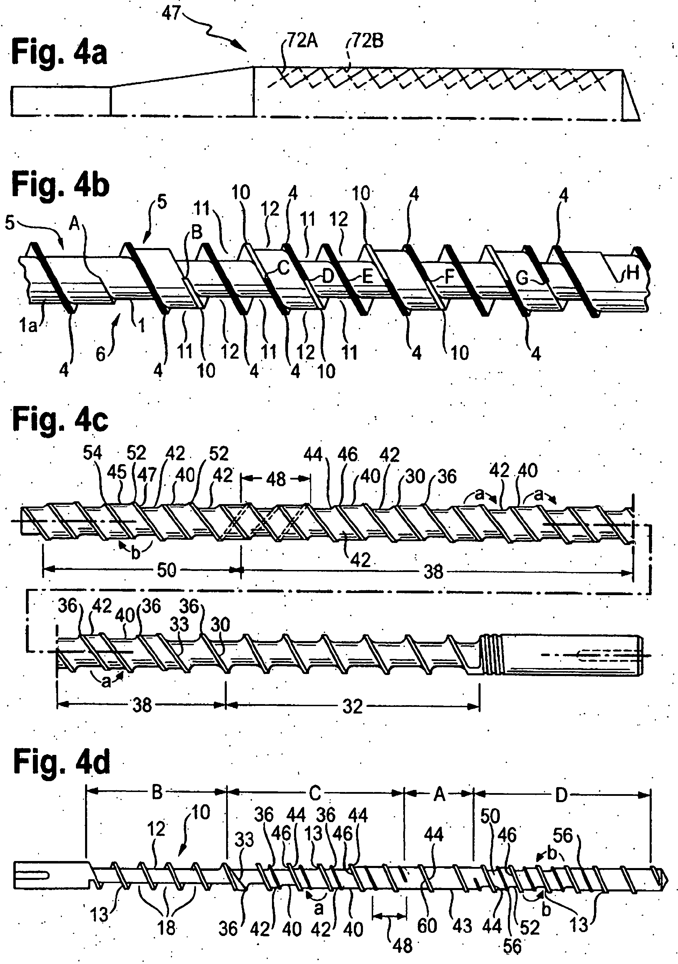

Die Abbildungsfolge der Figuren 4a bis 4d zeigt den Eingangs zitierten Stand der Technik anhand ausgewählter Abbildungen von Extruderschnecken bzw. von relevanten Ausschnitten daraus, um auch in der Zeichnung einen Vergleich zwischen erfindungsgemäßen Ausführungsformen und bekannten Schneckenbauformen zu geben.

### Bezugszeichenliste

- 1: Extruderschnecke
- 2: Einzugszone
- 3: Umwandlungs- bzw. Aufschmelzzone
- 4: Ausstoß-, Pump- bzw. Meteringzone
- 5: Mischzone
- 6: Überström- bzw. Barrieresteg
- 7: Hauptsteg
- 8: Barrieresteg
- 9: Hauptsteg der Mischzone 5
- 10: Mischstift

- mᵢ: Steigung, i=1,2,3
- α: Winkel
- β: Winkel
- γ: Winkel
- δ: Winkel zwischen Reihe von Stiften 10 und Hauptsteg 9
- S: Schmelze
- F: Feststoff
- vₒ: Umfangsgeschwindigkeit
- vₐ: Axialgeschwindigkeit
- vᵣ: Relativgeschwindigkeit

## Patentansprüche

1. Extruderschnecke (1) zum Plastifizieren von mindestens einem Kunststoff oder Kunststoffgemisch in Schüttgut-Form, wobei die Extruderschnecke (1) einen vierteiligen Aufbau aufweist, wobei die Extruderschnecke (1) eine Einzugszone (2), eine Aufschmelzzone (3), eine als Wave-Zone ausgebildete Ausstoßzone (4) und eine zwischen der Aufschmelzzone (3) und der Ausstoßzone (4) angeordnete eingängige Mischzone (5) mit einem Hauptsteg (9)aufweist, wobei die Gangsteigung (m₂) in der Mischzone (5) größer als in der Aufschmelzzone (3) ist.

2. Extruderschnecke nach Anspruch 1, **dadurch gekennzeichnet, dass** die Aufschmelzzone (3) mehrgängig ausgebildet ist und zwei oder mehr Hauptstege (7) aufweist und/oder als zwei-oder mehrgängige Barriere (8) ausgeführt ist.

3. Extruderschnecke nach Anspruch 1 oder 2, **dadurch gekennzeichnet, dass** die Gangsteigung (m₂) in der Mischzone (5) größer als ca. 21° ist.

4. Extruderschnecke nach dem vorhergehenden Anspruch, **dadurch gekennzeichnet, dass** die Gangsteigung (m₂) in der Mischzone (5) mehr als ca. 45° bis etwa 70° beträgt.

5. Extruderschnecke nach einem der vorhergehenden Ansprüche, **dadurch gekennzeichnet, dass** die Gangsteigung (m₁, m₃) der zu der Mischzone (5) benachbarten Zonen (3,4) im Wesentlichen gleich groß ist.

6. Extruderschnecke nach einem der vorhergehenden Ansprüche, **dadurch gekennzeichnet, dass** die Gangsteigung (m₂) in der Mischzone (5) größer als die Gangsteigung (m₁, m₃) in den benachbarten Zonen (3,4) ist.

7. Extruderschnecke nach einem der vorhergehenden Ansprüche, **dadurch gekennzeichnet, dass** in der Mischzone (5) für eine noch bessere Durchmischung von Feststoff (F) und Schmelze (S) zusätzlich Mischstifte (10) in Form von einer oder von mehreren Stiftreihen in Umfangsrichtung und/oder unter einem Winkel (δ) zu dem Hauptsteg (9) der Mischzone (5) angeordnet sind.

8. Extruderschnecke nach einem der vorhergehenden Ansprüche, **dadurch gekennzeichnet, dass** mindestens ein Überströmsteg (6) in der Wave- bzw. Ausstoßzone (4) unter einem Winkel gegenüber dem Hauptsteg (7) gekippt angeordnet ist.

9. Extruderschnecke nach einem der vorhergehenden Ansprüche, **dadurch gekennzeichnet, dass** ein Hauptsteg (9) der Mischzone (5) in den ersten Überströmsteg (6) in der Wave-bzw. Ausstoßzone (4) stetig ausläuft.

10. Extruderschnecke nach dem vorhergehenden Anspruch, **dadurch gekennzeichnet, dass** der Hauptsteg (9) der Mischzone (5) und der erste Überströmsteg (6) in der Wave- bzw. Ausstoßzone (4) die selbe Steigung (m₂) aufweisen.

## Claims

1. An extruder screw (1) for plasticizing at least one plastic or plastic mixture present in the form of a bulk material, wherein the extruder screw (1) has a four-part structure, wherein the extruder screw (1) has a feed zone (2), a transition zone (3), a metering zone (4) configured as a wave zone and a single-start mixer zone (5), arranged between the transition zone (3) and metering zone (4), with a main web (9), wherein the pitch (m₂) in the mixer zone (5) is greater than in the transition zone (3).

2. The extruder screw according to Claim 1, **characterized in that** the transition zone (3) is constructed in a multi-start manner and has two or more main webs (7) and/or is embodied as a two-start or multi-start barrier (8).

3. The extruder screw according to Claim 1 or 2, **characterized in that** the pitch (m₂) in the mixer zone (5) is greater than ca. 21°.

4. The extruder screw according to the preceding claim, **characterized in that** the pitch (m₂) in the mixer zone (5) is more than ca. 45° to approximately 70°.

5. The extruder screw according to one of the preceding claims, **characterized in that** the pitch (m₁, m₃) of the zones (3, 4) adjacent to the mixer zone (5) is substantially of equal amount.

6. The extruder screw according to one of the preceding claims, **characterized in that** the pitch (m₂) in the mixer zone (5) is greater than the pitch (m₁, m₃) in the adjacent zones (3, 4).

7. The extruder screw according to one of the preceding claims, **characterized in that** in the mixer zone (5), for an even better mixing of solid matter (F) and melt (S), additional mixing pins (10) in the form of one or of a plurality of pin rows are arranged in circumferential direction and/or at an angle (δ) to the main web (9) of the mixer zone (5).

8. The extruder screw according to one of the preceding claims, **characterized in that** at least one overflow web (6) is arranged in the wave- or respectively metering zone (4), tilted at an angle with respect to the main web (7).

9. The extruder screw according to one of the preceding claims, **characterized in that** a main web (9) of the mixer zone (5) runs out continuously into the first overflow web (6) in the wave- or respectively metering zone (4).

10. The extruder screw according to the preceding claim, **characterized in that** the main web (9) of the mixer zone (5) and the first overflow web (6) in the wave- or respectively metering zone (4) have the same pitch (m₂).

## Revendications

1. Vis sans fin d'extrudeuse (1) pour la plastification d'au moins un plastique ou mélange de plastiques sous forme de marchandise en vrac, dans lequel la vis sans fin d'extrudeuse (1) présente une construction en quatre parties, dans lequel la vis sans fin d'extrudeuse (1) présente une zone d'alimentation (2), une zone de fusion (3), une zone d'éjection (4) formée en tant que zone wave et une zone de mélange (5) à une voie disposée entre la zone de fusion (3) et la zone d'éjection (4), comprenant une âme principale (9), sachant que le pas des filets (m₂) dans la zone de mélange (5) est supérieur à celle de la zone de fusion (3).

2. Vis sans fin d'extrudeuse selon la revendication 1, **caractérisée en ce que** la zone de fusion (3) est conçue avec plusieurs filets et présente deux âmes principales ou plus (7) et/ou est conçue en tant que barrière à deux ou plusieurs filet (s) (8).

3. Vis sans fin d'extrudeuse selon la revendication 1 ou 2, **caractérisée en ce que** le pas des filets (m₂) dans la zone de mélange (5) est supérieur à environ 21°.

4. Vis sans fin d'extrudeuse selon l'une des revendications précédentes, **caractérisée en ce que** le pas des filets (m₂) dans la zone de mélange (5) est supérieur à environ 45° à environ 70°.

5. Vis sans fin d'extrudeuse selon l'une des revendications précédentes, **caractérisée en ce que** le pas des filets (m₁, m₃) des zones (3, 4) voisines de la zone de mélange (5) est essentiellement égal.

6. Vis sans fin d'extrudeuse selon l'une des revendications précédentes, **caractérisée en ce que** le pas des filets (m₂) dans la zone de mélange (5) est supérieur au pas des filets (m₁, m₃) dans les zones (3, 4) voisines.

7. Vis sans fin d'extrudeuse selon l'une des revendications précédentes, **caractérisée en ce que** dans la zone de mélange (5), des tiges de mélange supplémentaires (10) sous forme d'une ou plusieurs rangée(s) de tiges dans le sens périphérique et/ou dans un angle (δ) par rapport à la âme principale (9) de la zone de mélange (5) sont disposées pour un meilleur mélange des solides (F) et de la masse fondue (S).

8. Vis sans fin d'extrudeuse selon l'une des revendications précédentes, **caractérisée en ce qu'**au moins une âme de trop-plein (6) est disposée inclinée dans un angle par rapport à l'âme principale (7) dans la zone d'éjection ou zone wave (4).

9. Vis sans fin d'extrudeuse selon l'une des revendications précédentes, **caractérisée en ce qu'**une âme principale (9) de la zone de mélange (5) s'écoule en continu dans la première âme de trop-plein (6) dans la zone d'éjection ou zone wave (4).

10. Vis sans fin d'extrudeuse selon l'une des revendications précédentes, **caractérisée en ce que** la âme principale (9) de la zone de mélange (5) et la première âme de trop-plein (6) dans la zone d'éjection ou zone wave (4) présentent le même pas (m₂).
